# EUROPÄISCHE PATENTSCHRIFT

(11) **EP 3 371 858 B1**
(45) Veröffentlichungstag und Bekanntmachung des Hinweises auf die Patenterteilung: **17.02.2021**
(21) Anmeldenummer: 15794112.1
(22) Anmeldetag: 03.11.2015
(51) Int. Cl.: H01S 3/00, H05G 2/00, H01S 3/034, H01S 3/223, H01S 3/23

(54) **TREIBERLASERANORDNUNG, EUV-STRAHLUNGSERZEUGUNGSVORRICHTUNG DAMIT UND VERFAHREN ZUM VERSTÄRKEN VON LASERPULSEN**
DRIVER LASER ASSEMBLY, EUV RADIATION-GENERATING DEVICE COMPRISING THE DRIVER LASER ASSEMBLY, AND METHOD FOR AMPLIFYING LASER PULSES
SYSTÈME DE LASER EXCITATEUR, DISPOSITIF DE GÉNÉRATION DE RAYONNEMENT UV EXTRÊME ET PROCÉDÉ POUR AMPLIFIER DES IMPULSIONS LASER

(43) Veröffentlichungstag der Anmeldung: 12.09.2018
(73) Patentinhaber: TRUMPF Lasersystems for Semiconductor Manufacturing GmbH, 71254 Ditzingen (DE)
(72) Erfinder: BORSTEL, Michael von, 74385 Pleidelsheim (DE)
(74) Vertreter: Kohler Schmid Möbus Patentanwälte
(86) Internationale Anmeldenummer: PCT/EP2015/075537
(87) Internationale Veröffentlichungsnummer: WO 2017/076427

(56) Entgegenhaltungen:
- US-A1- 2009 314 967
- US-A1- 2015 028 231
- GREEN M R ET AL: "Isolation between amplifiers in a TEA CO2 laser using absorbing gases", JOURNAL OF PHYSICS D: APPLIED PHYSICS, INSTITUTE OF PHYSICS PUBLISHING LTD, GB, Bd. 13, Nr. 8, 14. August 1980 (1980-08-14), Seiten 1399-1404, XP020011745, ISSN: 0022-3727, DOI: 10.1088/0022-3727/13/8/009

## Beschreibung

Die vorliegende Erfindung betrifft eine Treiberlaseranordnung für eine EUV-Strahlungserzeugungsvorrichtung, umfassend: eine Strahlquelle zur Erzeugung von Laserpulsen, sowie eine Verstärkeranordnung mit mindestens einem optischen Verstärker zur Verstärkung der Laserpulse, eine EUV-Strahlungserzeugungsvorrichtung mit einer solchen Treiberlaseranordnung sowie ein Verfahren zum Verstärken von Laserpulsen in mindestens einem optischen Verstärker einer Treiberlaseranordnung.

Aus der US 2009/0095925 A1 ist eine Treiberlaseranordnung für eine EUV-Strahlungserzeugungsvorrichtung bekannt geworden. Die Treiberlaseranordnung weist eine Strahlquelle zur Erzeugung von gepulsten Laserstrahlen bzw. von Laserpulsen sowie einen oder mehrere optische Verstärker zur Verstärkung der Laserpulse auf. Die Strahlquelle der Treiberfaseranordnung dient zur Erzeugung von so genannten Seed-Pulsen, die in dem bzw. in den optischen Verstärkern auf hohe Laserleistungen von mehreren kW, ggf. von 10 kW oder darüber, verstärkt werden. Die von der Treiberlaseranordnung verstärkte Laserstrahlung wird über eine Strahlführungseinrichtung einer Fokussiereinrichtung zugeführt, um den bzw. die gepulsten Laserstrahlen auf ein Target-Material in einem Zielbereich zu fokussieren. Das Target-Material geht bei der Bestrahlung mit dem Laserstrahl in einen Plasma-Zustand über und emittiert hierbei EUV-Strahlung.

US 2015/0028231 A1 offenbart eine Treiberlaseranordnung für eine EUV-Strahlungserzeugungsanordnung beinhaltend einen gasförmigen, sättigbaren Absorber in einer Kammer zur ASE Unterdrückung.

Bei der Verstärkung von Laserpulsen in einer solchen Verstärkeranordnung bzw. generell in einem optischen Verstärker kann es zu so genannten Selbst-Oszillationen ("self-lasing") bzw. zu so genannter ASE ("amplified spontaneous emission") kommen, d.h. zu verstärkten spontanen Emissionen, die zur Begrenzung der Verstärkung in einer jeweiligen Verstärker-Stufe und im schlimmsten Fall sogar zu deren Zerstörung führen können. ASE erhöht den Signaluntergrund, so dass auch ohne das Vorhandensein eines zu verstärkenden Eingangssignals in Form eines gepulsten Laserstrahls bzw. in Form von Laserpulsen in dem optischen Verstärker Strahlung erzeugt wird.

In der WO 2015/045102 A1 ist eine Laservorrichtung beschrieben, die einen Master-Oszillator aufweist, der einen gepulsten Laserstrahl emittiert. Der gepulste Laserstrahl wird in einer Mehrzahl von optischen Verstärkern verstärkt, die im optischen Strahlweg des gepulsten Laserstrahls angeordnet sind. Die Laservorrichtung kann zusätzlich einen Lichtreflektor aufweisen, der es dem gepulsten Laserstrahl erlaubt, durch diesen hindurchzutreten, wobei der Lichtreflektor selbst-oszillierende Strahlung reflektiert, die an einem der Mehrzahl von Verstärkern erzeugt wird. Die Laservorrichtung weist auch einen Strahlungsabsorber auf, der die selbst-oszillierende Strahlung, die von dem Lichtreflektor reflektiert wird, aufnimmt und absorbiert.

Aus der US 7,508,487 B2 ist ein lithographisches Projektionssystem bekannt geworden, bei dem die Strahlungsenergie, die einem Substrat zugeführt wird, präzise kontrolliert werden soll. Zu diesem Zweck kann eine Abschwächung der Strahlung durch Injektion eines absorbierenden Gases in ein Volumen einer Kammer erfolgen, durch das der Strahl hindurchtritt. Bei einem Ausführungsbeispiel erfolgt die Absorption des Strahls durch das absorbierende Gas an einem Fokuspunkt in der Kammer. Bei einem weiteren Ausführungsbeispiel tritt das absorbierende Gas mit einer Geschwindigkeit in die Kammer ein, die größer ist als die Schallgeschwindigkeit des absorbierenden Gases.

### Aufgabe der Erfindung

Der Erfindung liegt die Aufgabe zugrunde, eine Treiberlaseranordnung, eine EUV-Strahlungserzeugungsvorrichtung mit einer solchen Treiberlaseranordnung sowie ein Verfahren zum Verstärken von Laserpulsen in mindestens einem optischen Verstärker bereitzustellen, bei denen verstärkte spontane Emissionen der optischen Verstärker unterdrückt werden.

### Gegenstand der Erfindung

Das gestellte technische Problem wird gelöst durch eine Anordnung und ein Verfahren wie in den unabhängigen Ansprüchen 1,15 definiert. Bevorzugte Ausführungsbeispiele werden in den abhängigen Ansprüchen definiert.

Diese Aufgabe wird gelöst durch eine Treiberlaseranordnung der eingangs genannten Art, weiter umfassend: mindestens eine Absorbereinrichtung, die zur Unterdrückung von verstärkten spontanen Emissionen einen sättigbaren Absorber umfasst, der von den Laserpulsen durchlaufen wird.

Der Erfinder schlägt vor, zur Unterdrückung von verstärkten spontanen Emissionen (ASE), d.h. von Photonen, die unerwünschter Weise in den optischen Verstärkern erzeugt und verstärkt werden, einen sättigbaren Absorber zu verwenden, der von dem gepulsten Laserstrahl bzw. den Laserpulsen durchlaufen wird, d.h. der Strahlengang des gepulsten Laserstrahls verläuft in dem sättigbaren Absorber entlang einer Absorberstrecke. Die Absorberstrecke mit dem sättigbaren Absorber ist typischer Weise im Strahlengang zwischen den optischen Verstärkern oder im Strahlengang vor oder nach dem mindestens einen optischen Verstärker angeordnet. Insbesondere können zwei oder mehr Absorbereinrichtungen in der Treiberlaseranordnung, insbesondere in der Verstärkeranordnung, angeordnet sein.

Bei einem sättigbaren Absorber handelt es sich um ein Material mit einem intensitätsabhängigen Absorptionskoeffizienten, das beim Überschreiten eines als Sättigungsintensität bezeichneten Schwellwerts der Intensität für den Laserstrahl, genauer gesagt für einen jeweiligen Laserpuls, transparent wird, d.h. die Absorption des Laserpulses geht gegen Null. Bei der Erfindung weist der sättigbare Absorber diese Eigenschaft für die Wellenlänge der verwendeten Laserpulse auf, wobei der sättigbare Absorber typischer Weise in einem Wellenlängenbereich um die Laserwellenlänge herum eine ausreichende Absorption aufweist, um auch die Wellenlängen, die beim "self-lasing" bzw. der ASE erzeugt werden, zu absorbieren. Das Material, welches als sättigbarer Absorber verwendet wird, hängt somit von der Wellenlänge der Laserpulse ab. Aufgrund der nichtlinearen Sättigung des absorbierenden Mediums erfährt der intensivste Teil des Strahlungsfeldes bei einem sättigbaren Absorber die geringste Absorption und damit die größte Verstärkung.

Bei einer Ausführungsform ist die Treiberlaseranordnung ausgebildet, die Laserpulse der Absorbereinrichtung bzw. der Absorberstrecke mit einer Intensität zuzuführen, die größer ist als eine Sättigungsintensität des sättigbaren Absorbers für die Laserwellenlänge. Wie weiter oben beschrieben wurde, wird für den Fall, dass ein jeweiliger Laserpuls die Sättigungsintensität überschreitet, der Absorber gesättigt und somit transparent für die Laserstrahlung. Die Sättigungsintensität des sättigbaren Absorbers kann ggf. eingestellt werden (s.u.), so dass einerseits die Laserpulse den Absorber ohne zu großen Leistungsverlust sättigen und andererseits die Photonen, die durch spontane verstärkte Emissionen bzw. durch "self-lasing" (bei anderen Wellenlängen) erzeugt werden, sicher absorbiert werden. Die Intensität der Laserpulse am Ort der Absorbereinrichtung hängt von der Intensität ab, mit welcher die Laserpulse in der Strahlquelle erzeugt werden, sowie von der Verstärkung in dem bzw. in den optischen Verstärkern, die vor der Absorbereinrichtung angeordnet sind.

Die Intensität der Laserpulse kann beispielsweise mit Hilfe der Strahlquelle so eingestellt werden, dass die obige Bedingung erfüllt ist.

Unter der Intensität eines Laserpulses wird die maximale Intensität des Laserpulses verstanden. Die maximale Intensität eines Laserpulses ist bei der vorliegenden Anwendung typischer Weise um mehrere Größenordnungen höher als die Sättigungsintensität des Absorbers, so dass der Absorber typischer Weise im Wesentlichen während der gesamten Pulsdauer eines Laserpulses gesättigt und somit transparent für den Laserpuls ist. In den Pulspausen zwischen zwei aufeinander folgenden Laserpulsen sinkt die Intensität der Laserstrahlung, die dem Absorber zugeführt wird, praktisch auf Null und somit unter die Sättigungsintensität. Daher kann der sättigbare Absorber in den Pulspausen auftretende verstärkte spontane Emissionen unterdrücken bzw. absorbieren, sofern die Sättigung des Absorbers während der Pulspause schnell genug beseitigt wird, d.h. der Absorber schnell genug relaxiert oder ausgetauscht wird (s.u.).

Die Absorbereinrichtung weist eine Kammer auf, in der eine Absorberstrecke gebildet ist und die Absorbereinrichtung umfasst eine Gaszuführung zur Zuführung des sättigbaren Absorbers in Form eines sättigbaren absorbierenden Gases in die Kammer. Wie weiter oben beschrieben wurde, hängt die Art des verwendeten sättigbaren Absorbers von der Wellenlänge der Laserpulse ab, durch die der Absorber gesättigt werden soll. Bei Wellenlängen im sichtbaren Wellenlängenbereich oder im nahen IR-Wellenlängenbereich kann es sich bei dem sättigbaren Absorber beispielsweise um einen Festkörper handeln. Bei der Verwendung einer Strahlquelle, welche einen oder mehrere CO₂-Laser zur Erzeugung eines (gepulsten) Laserstrahls bei einer Wellenlänge von ca. 10,6 µm aufweist, wird typischer Weise ein Gas als sättigbarer Absorber verwendet. Das sättigbare absorbierende Gas sollte in diesem Fall schnell durch die Kammer geströmt werden, um laufend absorptionsfähiges Gas bereitzustellen. Auf diese Weise wird erreicht, dass nach einem Laserpuls die Sättigung des in der Kammer befindlichen Gases rasch beseitigt wird, so dass das in der Kammer befindliche Gas in der darauf folgenden Pulspause auftretende spontane Emissionen absorbieren kann. Die Sättigung des Gases in der Kammer kann beispielsweise dadurch beseitigt werden, dass dieses während der Pulspause ganz oder zumindest teilweise gegen ungesättigtes Gas ausgetauscht wird.

Bei einer Weiterbildung ist die Absorbereinrichtung ausgebildet, den Druck des sättigbaren absorbierenden Gases in der Kammer, die Länge der Absorberstrecke in der Kammer und/oder die Zusammensetzung des sättigbaren absorbierenden Gases in der Kammer einzustellen. Durch die Einstellung der Länge der Absorberstrecke in der Kammer, des Drucks und damit der Dichte bzw. der Konzentration des absorbierenden Gases in der Kammer sowie ggf. der Zusammensetzung des absorbierenden Gases kann die Sättigungsintensität der Absorbereinrichtung eingestellt bzw. optimiert werden. Die Sättigungsintensität sollte einerseits so groß gewählt werden, dass die ASE-Photonen sicher absorbiert werden und andererseits klein genug, dass ein jeweiliger Laserpuls in der Lage ist, das Gas ohne zu großen Leistungsverlust zu sättigen. Aufgrund der typischer Weise verwendeten hohen Laserleistungen von ggf. mehreren Kilowatt liegt die (maximale) Intensität eines Laserpulses typischer Weise um mehrere Größenordnungen über der Sättigungsintensität, so dass letztere Bedingung praktisch automatisch erfüllt ist.

Für die Einstellung der Dichte des absorbierenden Gases in der Kammer kann der Druck des in die Kammer einströmenden absorbierenden Gases eingestellt bzw. variiert werden. Zu diesem Zweck kann der Gasfluss in die Kammer beispielsweise mittels einer Düse der Gaszuführung geeignet angesteuert werden. Die Länge der Absorberstrecke kann angepasst werden, indem die Länge der Wegstrecke, die die Laserpulse in der Kammer bzw. in dem absorbierenden Gas zurücklegen, verkürzt oder verlängert wird. Insbesondere wenn die Laserpulse im Wesentlichen parallel zum Gasstrom durch die Kammer verlaufen, kann zu diesem Zweck die Strecke zwischen einem Gaseinlass der Gaszuführung in die Kammer und einem Gasauslass einer Gasabführung zur Abführung des Gases aus der Kammer verlängert oder verkürzt werden. Auch die Zusammensetzung des der Kammer zugeführten absorbierenden Gases kann eingestellt werden. In diesem Fall weist die Absorbereinrichtung typischer Weise mehrere Gasreservoirs auf, aus denen unterschiedliche Gasbestandteile des der Kammer zugeführten absorbierenden Gases entnommen werden können. Die Gasbestandteile können der Kammer jeweils über eigene Düsen der Gaszuführung zugeführt werden, es ist aber auch möglich, dass die Gasbestandteile vor der Zuführung in die Kammer gemischt werden, um diese mit einem gewünschten Mischungsverhältnis bzw. Partialdruckverhältnis der Kammer zuzuführen.

Für die Einstellung des Drucks des absorbierenden Gases in der Kammer, der Länge der Absorberstrecke in der Kammer und/oder der Zusammensetzung des Gases in der Kammer kann die Absorbereinrichtung eine Steuereinrichtung aufweisen. Die Steuereinrichtung kann insbesondere auch zur Einstellung der Strahlungsleistung des von der Strahlquelle erzeugten Laserpulse dienen, so dass die Strahlungsleistung des Laserpulse an die Sättigungsintensität des sättigbaren Absorbers an angepasst werden kann.

Bei einer weiteren Weiterbildung ist das sättigbare absorbierende Gas ausgewählt aus der Gruppe umfassend: SF₆, Wasser, Kohlenwasserstoffe, CO₂ sowie Mischungen derselben. In der Habilitationsschrift "Gütegeschaltete Niederdruck-CO2-Laser" von Wolfgang Viöl, Düsseldorf, 1994, wird in Kapitel 3.1.5 beschrieben, dass zur Güteschaltung eines CO₂-Lasersystems mit mikrowellenangeregtem Verstärker eine passive Güteschaltung mit Hilfe eines sättigbaren Absorbers dienen kann. Als mögliche sättigbare Absorber werden dort SF₆, heißes CO₂-Gas, Propen, Vinylchlorid sowie Ammoniak und Halogen-Kohlenwasserstoffe angegeben. Bei letzteren soll der Stark-Effekt zur Verschiebung bzw. Aufspaltung der Energieniveaus ausgenutzt werden. Es versteht sich, dass auch andere als die hier genannten Gase als sättigbarer Absorber verwendet werden können, sofern diese in der Nähe der Wellenlänge der Strahlquelle vorhandene Selflasing-Wellenlängen absorbieren (d.h. beispielsweise bei CO₂-Lasern Wellenlängen im IR-Wellenlängenbereich um ca. 9-11 µm).

Bei einer weiteren Ausführungsform ist die Gaszuführung ausgebildet, das sättigbare absorbierende Gas quer (d.h. senkrecht) oder parallel zur Absorberstrecke durch die Kammer zu führen. Zu diesem Zweck weist die Gaszuführung typischer Weise eine oder mehrere entsprechend, d.h. quer oder parallel zum Strahlengang der Laserpulse ausgerichtete Düsen auf. Eine Strömung des sättigbaren absorbierenden Gases quer oder parallel zur Absorberstrecke, d.h. zum Strahlengang der Laserpulse, der innerhalb des sättigbaren absorbierenden Gases verläuft, ist vorteilhaft, da in diesem Fall der Anteil der Strahlungsintensität der Laserpulse, der für die Sättigung des Gases erforderlich ist, über den Strahlquerschnitt im Wesentlichen konstant ist. Bei der Strömung des Gases quer zur Absorberstrecke kann in der Regel ein schneller Austausch des Gases in der Kammer vorgenommen werden, wobei sich das Gas typischer Weise stark aufheizt. Bei der parallelen Strömung des Gases durch die Kammer ist die Verweildauer des Gases in der Kammer bzw. die Wechselwirkungsdauer in der Regel größer als bei der Strömung quer zur Absorberstrecke.

Bei der parallelen Strömung des Gases zur Absorberstrecke strömt das Gas typischer Weise koaxial zum Strahlengang der Laserpulse. Zu diesem Zweck kann die Kammer in der Art eines Rohres mit z.B. kreisförmigem Rohrquerschnitt ausgebildet sein. Die Kreissymmetrie der Wechselwirkung des sättigbaren Gases mit den Laserpulsen hat sich als besonders vorteilhaft herausgestellt. Gegebenenfalls kann auch bei einer parallelen Ausrichtung des Gasstroms zum Strahlengang der Laserpulse das Gas innerhalb des Wechselwirkungsbereichs bzw. der Absorberstrecke in einem kurzen Zeitraum von z.B. ca. 10 µs bis ca. 40 µs, d.h. bei Pulsfrequenzen zwischen ca. 20 kHz und ca. 100 kHz, vollständig ausgetauscht werden. Es versteht sich, dass auch andere Geometrien der Kammer möglich sind.

Bei einer Weiterbildung umfasst die Absorbereinrichtung zusätzlich eine Einrichtung zur Erzeugung einer Gasentladung in der Kammer. Die Erzeugung einer Gasentladung ist insbesondere vorteilhaft, wenn das Gas die Kammer parallel zu den Laserpulsen bzw. parallel zur Absorberstrecke durchströmt, insbesondere wenn die Kammer röhrenförmig ausgebildet ist, so dass die röhrenförmige Kammer als Gasentladungsröhre verwendet wird. Die Einrichtung weist bevorzugt eine Anode und eine Kathode auf, die an entgegengesetzten Seiten der röhrenförmigen Kammer, in der Regel außerhalb der Kammer, angeordnet sind. In der Anode und in der Kathode kann jeweils eine Öffnung für den Durchtritt der Laserpulse gebildet sein, wenn diese quer zum Strahlengang der Laserpulse ausgerichtet sind. Die Erzeugung einer Gasentladung des sättigbaren absorbierenden Gases hat den Vorteil, dass das sich das Gas aufheizt und dadurch die spontanen Emissionen besser absorbiert.

Die Treiberlaseranordnung weist zusätzlich eine Fokussiereinheit zur Fokussierung der Laserpulse auf einen in der Kammer gebildeten Zwischenfokus auf. Eine Fokussierung der Laserpulse auf einen Zwischenfokus ist insbesondere günstig, wenn das absorbierende Gas der Kammer quer zu den Laserpulsen bzw. zur Absorberstrecke zugeführt wird, und zwar in den Bereich des Zwischenfokus bzw. auf den zwischenfokussierten gepulsten Laserstrahl. Die Fokussiereinheit kann ein erstes fokussierendes optisches Element z.B. in Form einer Linse aufweisen, welche den typischer Weise kollimierten gepulsten Laserstrahl auf den Zwischenfokus fokussiert, sowie eine weitere Linse, welche den nach dem Durchlaufen des Zwischenfokus divergenten gepulsten Laserstrahl kollimiert.

Bei einer Weiterbildung weist die Gaszuführung eine Düse, bevorzugt eine Laval-Düse, zur (kontinuierlichen, d.h. nicht gepulsten) Zuführung des sättigbaren absorbierenden Gases in die Kammer auf. Es ist günstig, wenn das absorbierende Gas beim Austritt aus der Düse eine Geschwindigkeit aufweist, die in der Größenordnung der Schallgeschwindigkeit des absorbierenden Gases liegt. Bevorzugt ist die Geschwindigkeit des absorbierenden Gases beim Austritt aus der Düse größer als die Schallgeschwindigkeit des absorbierenden Gases. Um eine derart hohe Geschwindigkeit zu realisieren, ist die Düse bevorzugt als Laval-Düse ausgebildet. Eine hohe Geschwindigkeit des Gases beim Austritt aus der Düse verringert die Divergenz des strömenden Gases bzw. des Gasstroms beim Durchtritt durch die Kammer. Tritt das Gas mit einer hohen Geschwindigkeit aus der Laval-Düse aus, kann das Gas insbesondere bei einer Zuführung senkrecht zum gepulsten Laserstrahl innerhalb von z.B. ca. 10 µs und 40 µs (bzw. bei Pulsfrequenzen zwischen ca. 20 kHz und ca. 100 kHz) in der Regel komplett aus der Absorberstrecke bzw. aus dem Wechselwirkungsbereich mit den Laserpulsen abströmen. Dies ist günstig, da diese Zeitdauer ungefähr dem zeitlichen Abstand zwischen zwei Laserpulsen (d.h. der Pulspause) entspricht, so dass ein nachfolgender Laserpuls mit absorbierendem Gas wechselwirkt, das nicht bereits mit dem zeitlich unmittelbar vorhergehenden Laserpuls in Wechselwirkung getreten ist. Durch den Austausch des Gases kann erreicht werden, dass während der Pulspause ungesättigtes Gas in der Kammer vorhanden ist, welches die spontanen Emissionen absorbiert.

Bei einer weiteren Ausführungsform weist die Absorbereinrichtung eine Gasabführungseinrichtung zur Abführung des sättigbaren absorbierenden Gases aus der Kammer auf. Die Austrittsöffnung der Gasabführungseinrichtung ist bevorzugt der Düse bzw. der Düsenöffnung der Gaszuführung gegenüber liegend angeordnet, d.h. die Düsenöffnung und die Austrittsöffnung der Gasabführungseinrichtung liegen in einer Sichtlinie. Wie weiter oben beschrieben wurde, ist es vorteilhaft, wenn das absorbierende Gas möglichst schnell durch die Kammer strömt, um eine Überhitzung zu vermeiden. Für den schnellen Austritt des Gases aus der Kammer können eine oder mehrere Pumpen grundsätzlich beliebiger Bauart vorgesehen sein. Bevorzugt werden ölfreie Pumpen verwendet.

Bei einer weiteren Ausführungsform weist die Absorbereinrichtung mindestens eine Pumpe zum Transport des sättigbaren absorbierenden Gases vom Gasauslass der Kammer zu einem Gaseinlass der Kammer auf. Ein Gaskreislauf zur Umwälzung des sättigbaren absorbierenden Gases hat sich als vorteilhaft erwiesen. Als Pumpe kann in diesem Fall insbesondere ein Gebläse dienen, bevorzugt ein ölfreies, z.B. magnetgelagertes Gebläse, insbesondere ein Radialgebläse.

Bei einer weiteren Ausführungsform umfasst die Absorbereinrichtung zusätzlich mindestens eine Heizeinrichtung zur Aufheizung des sättigbaren absorbierenden Gases auf eine Temperatur von mindestens 400 K, bevorzugt von mindestens 500 K. Diese Ausführungsform ist insbesondere günstig, wenn als sättigbares absorbierendes Gas CO₂ verwendet wird. Das Aufheizen des CO₂-Gases führt dazu, dass das untere Laserniveau thermisch höher besetzt ist, so dass weniger CO₂-Moleküle benötigt werden und somit ein geringeres Gasvolumen erforderlich ist als bei Raumtemperatur. CO₂ weist zudem den Vorteil auf, dass es preiswert und chemisch unproblematisch ist. Es versteht sich, dass auch andere Gase als CO₂ für die Verwendung in der Kammer aufgeheizt werden können.

Bei einer Weiterbildung bildet die Pumpe zum Transport des sättigbaren absorbierenden Gases und/oder die Einrichtung zur Erzeugung einer Gasentladung in der Kammer die Heizeinrichtung oder einen wesentlichen Teil davon. Im ersten Fall ist die Pumpe typischer Weise als Gebläse ausgebildet, welches das sättigbare absorbierende Gas komprimiert und dadurch von Raumtemperatur auf eine Temperatur von z.B. 400 K oder mehr aufheizt. Bei dem Gebläse, welches als Heizeinrichtung dient, kann es sich insbesondere um ein magnetgelagertes Turboradialgebläse handeln. In diesem Fall kann ggf. auf eine zusätzliche Heizeinrichtung zur Aufheizung des Gases verzichtet werden. Alternativ oder zusätzlich kann auch die Einrichtung zur Erzeugung der Gasentladung in der Kammer als Heizeinrichtung zur Aufheizung des Gases verwendet werden.

Bei einer weiteren Ausführungsform weist die Kammer ein erstes Fenster zum Eintritt der Laserpulse in die Kammer und ein zweites Fenster zum Austritt der Laserpulse aus der Kammer auf. Es hat sich als günstig erwiesen, das Volumen der Kammer, in der die Absorberstrecke gebildet ist, vom restlichen Strahlengang der Laserpulse gasdicht abzutrennen. Zu diesem Zweck können ein erstes und zweites Fenster in der Kammer vorgesehen sein. Beim Material der Fenster kann es sich bei der Verwendung eines CO₂-Laserstrahls beispielsweise um Zinkselenid oder um (künstlichen) Diamant, z.B. CVD-Diamant, handeln. Die Fenster sind typischer Weise als Planplatten ausgebildet und können senkrecht oder ggf. schräg zur Strahlachse des gepulsten Laserstrahls ausgerichtet sein.

Bei einer vorteilhaften Weiterbildung bildet das erste Fenster und/oder das zweite Fenster ein Eintrittsfenster oder ein Austrittsfenster eines optischen Verstärkers der Verstärkeranordnung. Der bzw. die optischen Verstärker weisen typischer Weise ein Eintrittsfenster und ein Austrittsfenster auf, durch die die Laserpulse in den jeweiligen optischen Verstärker eintreten bzw. aus dem jeweiligen optischen Verstärker austreten. Diese Fenster können zusätzlich als Eintrittsfenster bzw. als Austrittsfenster der Kammer verwendet werden, d.h. die Kammer bzw. das Volumen der Kammer, in der die Absorberstrecke gebildet ist, schließt sich unmittelbar an den optischen Verstärker an. Insbesondere kann die Kammer auch zwischen zwei optischen Verstärkern angeordnet sein und sich unmittelbar an diese anschließen, so dass das Austrittsfenster eines optischen Verstärkers das Eintrittsfenster in die Kammer und das Austrittsfenster der Kammer das Eintrittsfenster eines nachfolgenden optischen Verstärkers bildet.

Bevorzugt umfasst die Strahlquelle einen CO₂-Laser zur Erzeugung der Laserpulse. Es versteht sich, dass die Strahlquelle nicht zwingend einen CO₂-Laser aufweisen muss, sondern dass diese auch Laser aufweisen kann, die Laserpulse mit anderen Wellenlängen erzeugen. Gegebenenfalls kann die Strahlquelle auch Laserpulse bei zwei unterschiedlichen Wellenlängen erzeugen. In diesem Fall ist der Absorber ggf. nur für die Laserpulse bei einer der beiden Wellenlängen, beispielsweise der Wellenlänge eines CO₂-Lasers, sättigbar.

Die Erfindung betrifft eine EUV-Strahlungserzeugungsvorrichtung, umfassend: eine Treiberlaseranordnung wie weiter oben beschrieben, eine Vakuum-Kammer, in der ein Target-Material an einer Zielposition anordenbar ist, sowie eine Strahlführungseinrichtung zur Führung der Laserpulse von der Treiberlasereinrichtung in Richtung auf die Zielposition. Wie weiter oben beschrieben wurde, werden die Laserpulse zum Target-Material, z.B. in Form von Zinn-Tröpfchen, geführt, um das Target-Material in einen Plasma-Zustand überzuführen, wobei ggf. die Intensität von zwei unmittelbar aufeinander folgenden Laserpulsen unterschiedlich sein kann, aber in jedem Fall über der Sättigungsintensität liegt.

Ein weiterer Aspekt der Erfindung betrifft ein Verfahren zum Verstärken von Laserpulsen in mindestens einem optischen Verstärker in einer Treiberlaseranordnung, wobei die Laserpulse zum Unterdrücken von verstärkten spontanen Emissionen vor oder nach dem mindestens einen optischen Verstärker eine Absorberstrecke mit einem sättigbaren Absorber durchlaufen. Wie weiter oben beschrieben wurde, können mit Hilfe des sättigbaren Absorbers verstärkte spontane Emissionen unterdrückt werden, die zwischen den Laserpulsen auftreten.

Bei einer Weiterbildung weisen die Laserpulse eine Intensität auf, die größer ist als eine Sättigungsintensität des sättigbaren Absorbers. Wie weiter oben beschrieben wurde, sättigt in diesem Fall ein jeweiliger Laserpuls den Absorber entlang der Absorberstrecke, so dass dieser für den Laserpuls transparent wird. Die Intensität des Laserpulses ist vorzugsweise deutlich, mindestens um einen Faktor 500, um einen Faktor 5000 oder um einen Faktor 50000, größer als die Sättigungsintensität des sättigbaren Absorbers. Auf diese Weise ist sichergestellt, dass nur ein geringer Anteil der Strahlungsleistung eines jeweiligen Laserpulses zur Sättigung des sättigbaren Absorbers verwendet werden muss. In den Pulspausen zwischen den Laserpulsen ist der Absorber nicht gesättigt und unterdrückt bzw. absorbiert spontane Emissionen.

Der sättigbare Absorber ist ein sättigbares absorbierendes Gas, das einer Kammer zugeführt wird, in der die Absorberstrecke gebildet ist. Die Verwendung eines sättigbaren Absorbers in Form eines sättigbaren absorbierenden Gases ist insbesondere bei Lasern mit Wellenlängen im IR-Wellenlängenbereich, beispielsweise bei CO₂-Lasern, vorteilhaft. Wie weiter oben beschrieben wurde, sollte das in der Kammer befindliche Gas in der Pulspause zwischen zwei aufeinander folgenden Laserpulsen idealer Weise vollständig ausgetauscht werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer EUV-Strahlungserzeugungsvorrichtung mit einer Treiberlaseranordnung, die drei optische Verstärker sowie zwei Absorbereinrichtungen aufweist,
- Fig. 2: eine schematische Darstellung einer Absorbereinrichtung gemäß Fig. 1, sowie
- Fig. 3: eine schematische Darstellung einer weiteren Absorbereinrichtung gemäß Fig. 1.

In der folgenden Beschreibung der Zeichnungen werden für gleiche bzw. funktionsgleiche Bauteile identische Bezugszeichen verwendet.

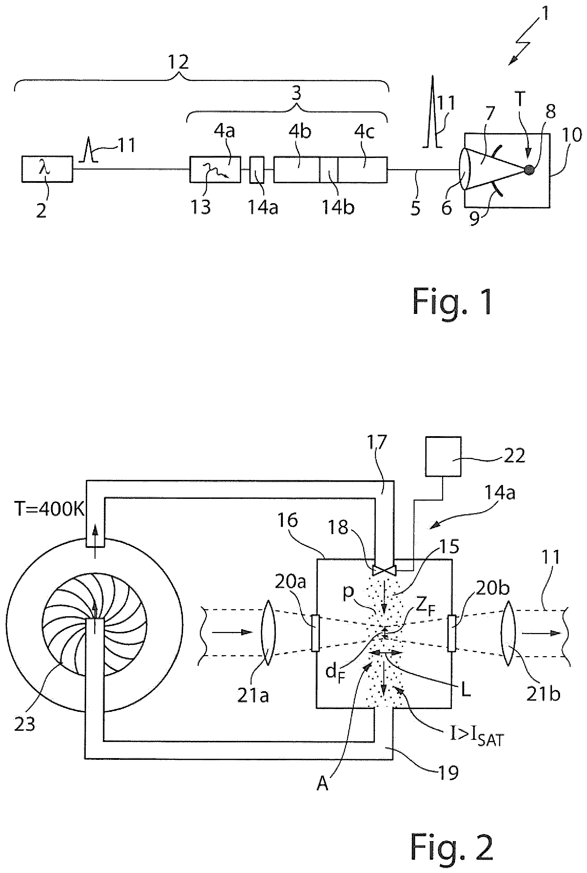

In Fig. 1 ist stark schematisch eine EUV-Strahlungserzeugungsvorrichtung 1 gezeigt, welche eine Strahlquelle 2, eine Verstärkeranordnung 3 mit drei optischen Verstärkern 4a, 4b, 4c bzw. Verstärkerstufen, eine nicht näher dargestellte Strahlführungseinrichtung 5 sowie eine Fokussierlinse 6 aufweist. Die Fokussierlinse 6 dient dazu, von der Strahlquelle 2 erzeugte und von der Verstärkeranordnung 3 verstärkte Laserpulse 11 an einem Zielbereich T zu fokussieren, an dem ein Target-Material 8 eingebracht ist. Das Target-Material 8 geht bei der Bestrahlung mit den Laserpulsen 11 in einen Plasma-Zustand über und emittiert hierbei EUV-Strahlung, die mittels eines Kollektorspiegels 9 fokussiert wird.

Bei dem in Fig. 1 gezeigten Beispiel weist der Kollektorspiegel 9 eine Öffnung zum Durchtritt der Laserpulse 11 auf und die Fokussierlinse 6 trennt eine Vakuum-Kammer 10, in welcher das Target-Material 8 angeordnet ist, von der Strahlführungseinrichtung 5. Die Strahlquelle 2 weist im gezeigten Beispiel Laserquelle in Form eines CO₂-Lasers auf, der die Laserpulse 11 in kurzer zeitlicher Folge erzeugt, um diese in der Verstärkeranordnung 3 zu verstärken und auf das Target-Material 8 bzw. in den Bereich der Zielposition T zu fokussieren. Die Strahlquelle 2 bildet gemeinsam mit der Verstärkeranordnung 3 eine Treiberlaseranordnung 12 der EUV-Strahlungserzeugungsvorrichtung 1. Die Strahlquelle 2 dient im gezeigten Beispiel zur Erzeugung der Laserpulse 11 bei einer Wellenlänge λ von 10,6 µm

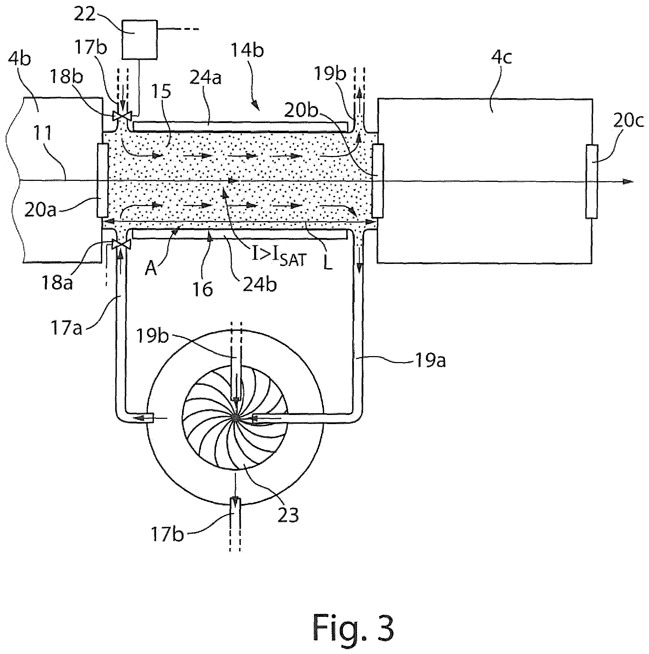

Bei der Verstärkung der Laserpulse in den optischen Verstärkern 4a-c, bei denen es sich z.B. um Verstärker mit einem gasförmigen Verstärkermedium handeln kann, treten unerwünschte verstärkte spontane Emissionen in Form von so genannten Selflasing-Photonen 13 auf, wie in Fig. 1 stark schematisch für den ersten optischen Verstärker 4a angedeutet ist. Um die Selflasing-Photonen bzw. die verstärkten spontanen Emissionen 13 zu unterdrücken, weist die Treiberlaseranordnung 12 zwei Absorbereinrichtungen 14a, 14b auf, von denen die erste im Strahlweg zwischen dem ersten optischen Verstärker 4a und dem zweiten optischen Verstärker 4b und die zweite den Strahlweg zwischen dem zweiten optischen Verstärker 4b und dem dritten optischen Verstärker 4c angeordnet ist. Die beiden Absorbereinrichtungen 14a, 14b, sind in **Fig. 2** bzw. in **Fig. 3** im Detail dargestellt und werden nachfolgend einzeln beschrieben.

Die erste Absorbereinrichtung 14a, die in Fig. 2 dargestellt ist, weist eine Kammer 16 auf, der ein sättigbarer Absorber in Form eines sättigbaren absorbierenden Gases 15 mit Hilfe einer Gaszuführung 17 in Form einer Rohrleitung zugeführt wird. Die Gaszuführung 17 weist eine Düse 18 auf, die im gezeigten Beispiel als Laval-Düse ausgebildet ist, bei der es sich aber auch um eine andere Art von Düse handeln kann. Aus der Laval-Düse 18 tritt das absorbierende Gas 15 mit einer Geschwindigkeit aus, die größer als die Schallgeschwindigkeit des absorbierenden Gases 15 ist. Durch die hohe Geschwindigkeit beim Eintritt des absorbierenden Gases 15 in die Kammer 16 weist das absorbierende Gas 15 bzw. die von diesem erzeugte Gasströmung beim Durchtritt durch die Kammer 16 nur eine vergleichsweise geringe Divergenz auf, so dass das absorbierende Gase 15 von einer Gasabführung 19, deren Austrittsöffnung aus der Kammer 16 der Düse 18 gegenüber liegend angeordnet ist, vollständig aufgenommen und aus der Kammer 16 abgeführt werden kann.

Die Kammer 16 in der in Fig. 2 gezeigten Absorbereinrichtung 14a weist ein erstes Fenster 20a zum Eintritt der Laserpulse 11 in die Kammer 16 sowie ein zweites Fenster 20b zum Austritt der Laserpulse 11 aus der Kammer 16 auf. Die beiden Fenster 20a,b können beispielsweise aus Zinkselenid oder aus Diamant gebildet sein. Bei dem in Fig. 2 gezeigten Beispiel weist die Absorbereinrichtung 14a eine Fokussiereinheit in Form einer ersten Linse 21a und einer zweiten Linse 21b auf, die außerhalb der Kammer 16 angeordnet sind. Die erste Linse 21a ist im Strahlweg der Laserpulse 11 vor dem ersten Fenster 20a angeordnet und dient zur Fokussierung des kollimierten gepulsten Laserstrahls 11 auf einen Zwischenfokus Z_{F}, der innerhalb der Kammer 16 gebildet ist. Die zweite Linse 21b dient zur erneuten Kollimation des vom Zwischenfokus Z_{F} divergent propagierenden gepulsten Laserstrahls 11. Der Durchmesser d_{F} des Zwischenfokus Z_{F} bzw. die Strahltaille des gepulsten Laserstrahls 11 im Bereich des Zwischenfokus Z_{F} liegt bei weniger als ca. d_{F} = 1 mm. Der gepulste Laserstrahl 11 kreuzt den Gasstrom des sättigbaren absorbierenden Gases 15 entlang einer Absorberstrecke A, entlang derer der gepulste Laserstrahl 11 mit dem absorbierenden Gas 15 in Wechselwirkung tritt. Die Länge L der Absorberstrecke A ist im gezeigten Beispiel deutlich größer als der Durchmesser d_{F} des Zwischenfokus Z_{F} und liegt im gezeigten Beispiel bei ca. L = 5 mm, um eine ausreichende Anzahl von Selflasing-Photonen 13 zu absorbieren.

Ein jeweiliger Laserpuls 11 weist entlang der Absorberstrecke A eine (maximale) Intensität I auf, die deutlich größer ist als die Sättigungsintensität I_{SAT} des sättigbaren absorbierenden Gases 15. Auf diese Weise ist sichergestellt, dass der jeweilige Laserpuls 11 das absorbierende Gas 15 sättigt und dieses für den Laserpuls 11 transparent wird, so dass die Laserpulse 11 von dem absorbierenden Gas 15 nicht bzw. nur in geringfügigem Umfang abgeschwächt werden. Die Selflasing-Photonen 13 weisen demgegenüber eine geringere Intensität auf, die nicht groß genug ist, um die Sättigungsintensität I_{SAT} zu erreichen, so dass diese von dem sättigbaren absorbierenden Gas 15 unterdrückt werden. Da während der Pulsdauer eines jeweiligen Laserpulses 11 die Sättigungsintensität I_{SAT} des absorbierenden Gases 15 überschritten wird, erfolgt die Unterdrückung der Selflasing-Photonen 13 nur in der Pulspause zwischen aufeinander folgenden Laserpulsen 11. Zwischen den Laserpulsen 11 ist die Intensität der Laserstrahlung praktisch Null, d.h. diese liegt deutlich unterhalb der Sättigungsintensität I_{SAT}, so dass das absorbierende Gas 15 die Selflasing-Photonen 13 unterdrückt bzw. absorbiert, sofern sichergestellt ist, dass zwischen den Laserpulsen 11 die Sättigung des Gases 15 beseitigt wird. Dies kann beispielsweise erreicht werden, wenn zwischen zwei aufeinander folgenden Laserpulsen 11 ein teilweiser oder vollständiger Austausch des Gases 15 in der Kammer 16 erfolgt.

Um die Selflasing-Photonen 13 wirksam zu unterdrücken, wird die Sättigungsintensität I_{SAT} geeignet eingestellt. Zu diesem Zweck weist die Absorbereinrichtung 14a eine Steuereinrichtung 22 auf, welche auf die Düse 18 einwirkt, um den Druck p und somit die Dichte des in die Kammer 16 einströmenden Gases 15 auf einen gewünschten Wert einzustellen. Durch die Steuereinrichtung 22 kann zusätzlich auch die Geschwindigkeit des aus der Düse 18 austretenden Gases 15 und somit in gewissem Maß dessen Divergenz beim Eintritt in die Kammer 16 eingestellt werden, wodurch sich die Länge L der Absorberstrecke A verändert, entlang derer die Laserpulse 11 dem absorbierenden Gas 15 ausgesetzt ist. Der Druck p des in die Kammer 16 einströmenden Gases 15 ist typischer Weise deutlich größer als 1 bar.

Bei dem sättigbaren absorbierenden Gas 15 handelt es sich im gezeigten Beispiel um CO₂, es können aber auch andere Arten von Gasen als sättigbares absorbierendes Gas 15 dienen, sofern diese Selflasing-Photonen bei Selflasing-Wellenlängen im infraroten Wellenlängenbereich absorbieren und bei der jeweiligen Laserwellenlänge A gesättigt werden, was bei CO₂ als absorbierendem Gas 15 selbstverständlich der Fall ist. Bei dem absorbierenden sättigbaren Gas 15 kann es sich beispielsweise um SF₆, Wasser(dampf), Kohlenwasserstoffe, sowie Mischungen dieser Gase untereinander bzw. Mischungen mit CO₂ handeln.

Bei dem in Fig. 2 gezeigten Beispiel wird das absorbierende CO₂-Gas 15 mit Hilfe einer Pumpe in Form eines Gebläses 23, genauer gesagt eines magnetgelagerten Turboradialgebläses, von der Gasabführung 19 zurück zur Gaszuführung 17 geführt, d.h. das CO₂-Gas 15 wird in einem typischer Weise geschlossenen Gaskreislauf umgewälzt. Das Radialgebläse 23 komprimiert das von der Gasabführung 19 kommende CO₂-Gas 15, wobei Kompressionswärme entsteht, so dass das CO₂-Gas 15, welches von dem Radialgebläse 23 in die Gaszuführung 17 übertritt, eine Temperatur T von z.B. 400 K oder darüber, beispielsweise von 500 K oder darüber, aufweist. Das Aufheizen des CO₂-Gases 15 ist vorteilhaft, da das untere Laserniveau bei höheren Temperaturen thermisch höher besetzt ist als bei Raumtemperatur, so dass weniger CO₂-Moleküle für die Absorption der Selflasing-Photonen benötigt werden als bei Raumtemperatur. Durch das Turboradialgebläse 23 kann ggf. auf das Vorsehen einer zusätzlichen Heizung für das CO₂-Gas 15 verzichtet werden.

Aufgrund der vergleichsweise kurzen Strecke, die das absorbierende Gas 15 in der Kammer 16 quer zu den Laserpulsen 11 zurücklegt, ist ein vollständiger Gasaustausch des Gases 15 in der Kammer 16 in einem Zeitraum von z.B. 10 µs bis ca. 40 µs oder ggf. weniger möglich. Da zwischen zwei aufeinander folgenden Laserpulsen 11 üblicher Weise zumindest dieser Zeitraum liegt, verbleibt kein Rest des absorbierenden Gases, das von einem ersten Laserpuls 11 bereits abgesättigt wurde, in der Kammer 16 zurück, bevor der nachfolgende Laserpuls 11 in die Kammer 16 eintritt. Auf diese Weise wird verhindert, dass eine ggf. über den Strahlquerschnitt inhomogene Absorption des nachfolgenden Laserpulses 11 durch den Rest des bereits gesättigten Gases 15 in der Kammer 16 erfolgt. Zudem kann die Absorption der Selflasing-Photonen 13 in der Kammer 16 typischer Weise nur erfolgen, wenn ungesättigtes Gas 15 in der Kammer 16 zur Verfügung steht.

Während die in Fig. 2 gezeigte erste Absorbereinrichtung 14a ausgebildet ist, das sättigbare absorbierende Gas 15 quer zu den Laserpulsen 11 bzw. quer zur Absorberstrecke A durch die Kammer 16 zu führen, wird bei der in Fig. 3 gezeigten zweiten Absorbereinrichtung 14b das sättigbare absorbierende Gas 15 im Wesentlichen parallel zu den Laserpulsen 11 durch die Kammer 16 geführt. Bei dem in Fig. 3 gezeigten Beispiel ist die Kammer 16 als Rohr mit kreisförmigem Rohrquerschnitt ausgebildet, wobei an einem ersten Ende der rohrförmigen Kammer 16 das Eintrittsfenster 20a und an einem zweiten Ende der rohrförmigen Kammer 16 das Austrittsfenster 20b gebildet ist.

Die rohrförmige Kammer 16 von Fig. 3 schließt im gezeigten Beispiel unmittelbar an das Gehäuse des zweiten optischen Verstärkers 4b an, so dass das Austrittsfenster 2 des zweiten optischen Verstärkers 4b gleichzeitig das Eintrittsfenster in die Kammer 16 bildet. Die rohrförmige Kammer 16 schließt an ihrem anderen Ende unmittelbar an den dritten optischen Verstärker 4c an, so dass das Austrittsfenster 20b der Kammer 16 gleichzeitig das Eintrittsfenster in den dritten optischen Verstärker 4c bildet. Es versteht sich, dass die zweite Absorbereinrichtung 14b auch im Strahlweg hinter dem dritten Verstärker 4c angeordnet werden kann, um spontane Emissionen 13 zu unterdrücken. In diesem Fall kann das Austrittsfenster 20c des dritten optischen Verstärkers 4c als Eintrittsfenster für die zweite Absorbereinrichtung 14b dienen. Es versteht sich, dass auch die erste Absorbereinrichtung 14a sich ggf. direkt an das Gehäuse eines oder zwei der optischen Verstärker 4a-c anschließen kann, um das Eintrittsfenster 20a bzw. das Austrittsfenster 20b der Kammer 16 auch für den jeweiligen optischen Verstärker 4a-c zu nutzen.

Um die Gasführung parallel bzw. koaxial zu den Laserpulsen 11 zu ermöglichen, ist bei dem in Fig. 3 gezeigten Beispiel die Gaszuführung 17a, 17b an demjenigen Ende der Kammer 16 angeordnet, an dem das Eintrittsfenster 20a angebracht ist, während die Gasabführung 19a, 19b an demjenigen Ende der Kammer 16 gebildet ist, an dem das Austrittsfenster 20b gebildet ist, d.h. das sättigbare absorbierende Gas 15 strömt in der Propagationsrichtung der Laserpulse 11, wie dies in Fig. 3 durch Pfeile angedeutet ist. Es versteht sich, dass das absorbierende Gas 15 alternativ entgegen der Propagationsrichtung der Laserpulse 11 fließen kann. In diesem Fall sind die Positionen der Gaszuführung 17a, 17b und der Gasabführung 19a, 19b vertauscht. Die Eintrittsöffnungen der Gaszuführung 17a, 17b und die Austrittsöffnungen der Gasabführung 19a, 19b sind im gezeigten Beispiel diametral gegenüber liegend angeordnet, d.h. das absorbierende Gas 15 tritt radial nach innen in die Kammer 16 ein und entsprechend radial nach außen aus der Kammer 16 aus. Es versteht sich, dass abweichend von dem in Fig. 3 gezeigten Beispiel, bei dem die Gaszuführung 17a, 17b zwei Zuführungsleitungen aufweist, die an einander in radialer Richtung diametral gegenüber liegenden Eintrittsöffnungen in die Kammer 16 münden, auch mehr oder weniger als zwei Zuführungsleitungen vorgesehen sein können, über die das Gas 15 in radialer Richtung in die Kammer 16 einströmt. Insbesondere kann die Gaszuführung 17a, 17b eine einzige, kreisringförmig ausgebildete Eintrittsöffnung aufweisen. Es versteht sich, dass das in Bezug auf die Gaszuführung 17a, 17b Gesagte entsprechend auch für die Gasabführung 19a, 19b gilt.

Auch bei dem in Fig. 3 gezeigten Beispiel der zweiten Absorbereinrichtung 14b ist die Intensität I eines jeweiligen Laserpulses 11 größer als die Sättigungsintensität I_{SAT} des sättigbaren absorbierenden Gases 15, so dass das absorbierende Gas 15 für einen jeweiligen Laserpuls 11 transparent ist. Wie beim in Fig. 2 gezeigten Beispiel hängt die Sättigungsintensität I_{SAT} des absorbierenden Gases 15 unter anderem von der Gasdichte p ab, die über den Druck p bzw. die Geschwindigkeit des in die Kammer 16 eintretenden Gases 15 mit Hilfe der Steuerungseinrichtung 22 eingestellt werden kann, wozu diese auf die Gaszuführung 17a, 17b durch die Ansteuerung von entsprechenden Düsen 18a, 18b sowie ggf. auf die Gasabführung 19a, 19b geeignet einwirkt.

Die Steuerungseinrichtung 22 kann auch dazu dienen, die Zusammensetzung des der Kammer 16 zugeführten Gases 15 zu verändern bzw. einzustellen, beispielsweise können verschiedene Mischungsverhältnisse des der Kammer 16 zugeführten Gases 15 gewählt werden. Zu diesem Zweck kann die Steuerungseinrichtung 22 auf mehrere, in Fig. 3 nicht gezeigte Gas-Reservoirs für unterschiedliche Gasbestandteile bzw. entsprechende Ventile zugreifen.

Beim in Fig. 3 gezeigten Beispiel ist außerhalb der Kammer 16 entlang von deren Längsseiten eine Einrichtung in Form einer ersten Elektrode 24a (Anode) sowie einer zweiten Elektrode 24b (Kathode) angeordnet, zwischen denen zur Erzeugung einer Gasentladung in der Kammer 16 ein elektrisches Feld erzeugt wird, welches quer zu den Laserpulsen 11 verläuft. Zur Erzeugung des elektrischen Feldes wird zwischen den Elektroden 24a,b eine Spannung angelegt, die im gezeigten Beispiel von der Steuerungseinrichtung 22 vorgegeben wird. Die röhrenförmige Kammer 16 wirkt somit in der Art einer Gasentladungsröhre auf das sättigbare absorbierende Gas 15, um die Temperatur des Gases 15 und somit dessen Absorption für die Selflasing-Photonen 13 zu erhöhen.

Beim in Fig. 3 gezeigten Beispiel wirkt sich vorteilhaft aus, dass das absorbierende Gas 15 entlang der Absorptionsstrecke A im Wesentlichen rotationssymmetrisch bezüglich der Laserpulse 11 bzw. von deren Strahlachse durch die röhrenförmige Kammer 16 strömt. Es versteht sich aber, dass die Kammer 16 auch eine andere als eine kreisförmige bzw. rotationssymmetrische Geometrie aufweisen kann.

## Patentansprüche

1. EUV-Strahlungserzeugungsvorrichtung (1) mit:
einer Treiberlaseranordnung (12), umfassend:
eine Strahlquelle (2) zur Erzeugung von Laserpulsen (11),
eine Verstärkeranordnung (3) mit mindestens einem optischen Verstärker (4a-c) ausgebildet zur Verstärkung der Laserpulse (11), sowie mindestens eine Absorbereinrichtung (14a, 14b), die einen sättigbaren Absorber (15) ausgebildet zur Unterdrückung von verstärkten spontanen Emissionen (13) umfasst, der von den Laserpulsen (11) durchlaufen wird,
wobei die Absorbereinrichtung (14a, 14b) eine Kammer (16) aufweist, in der eine Absorberstrecke (A) gebildet ist, und wobei die Absorbereinrichtung (14a, 14b) eine Gaszuführung (17, 17a, 17b) zur Zuführung des sättigbaren Absorbers in Form eines sättigbaren absorbierenden Gases (15) in die Kammer (16) umfasst, einer Vakuum-Kammer (10), in der ein Target-Material (8) an einer Zielposition (T) angeordnet ist, sowie einer Strahlführungseinrichtung (5) ausgebildet zur Führung der Laserpulse (11) von der Treiberlasereinrichtung (12) in Richtung auf die Zielposition (T).
**dadurch gekennzeichnet,**
**dass** die Treiberlasereinrichtung (12) eine Fokussiereinheit (21a, 21b) ausgebildet zur Fokussierung der Laserpulse (11) auf einen in der Kammer (16) gebildeten Zwischenfokus (Z_{F}) aufweist.

2. EUV-Strahlungserzeugungsvorrichtung nach Anspruch 1, bei welcher die Treiberlasereinrichtung (12) ausgebildet ist, der Absorbereinrichtung (14a, 14b) die Laserpulse (11) mit einer Intensität (I) zuzuführen, die größer ist als eine Sättigungsintensität (I_{SAT}) des sättigbaren Absorbers (15) für die Laserwellenlänge (λ).

3. EUV-Strahlungserzeugungsvorrichtung nach Anspruch 1 oder 2, bei der die Absorbereinrichtung (14a, 14b) ausgebildet ist, den Druck (p) des sättigbaren absorbierenden Gases (15) in der Kammer (16), die Länge (L) der Absorberstrecke (A) in der Kammer (16) und/oder die Zusammensetzung des sättigbaren absorbierenden Gases (15) in der Kammer (16) einzustellen.

4. EUV-Strahlungserzeugungsvorrichtung nach einem der vorhergehenden Ansprüche, bei welcher das sättigbare absorbierende Gas (15) ausgewählt ist aus der Gruppe umfassend: SF₆, Wasserdampf, Kohlenwasserstoffe, CO₂ sowie Mischungen derselben.

5. EUV-Strahlungserzeugungsvorrichtung nach einem der vorhergehenden Ansprüche, bei welcher die Gaszuführung (17) ausgebildet ist, das sättigbare absorbierende Gas (15) quer oder parallel zur Absorberstrecke (A) durch die Kammer (16) zu führen.

6. EUV-Strahlungserzeugungsvorrichtung nach einem der vorhergehenden Ansprüche, bei der die Treiberlaseranordnung (12) eine Einrichtung (24a, 24b) zur Erzeugung einer Gasentladung in der Kammer (16) umfasst.

7. EUV-Strahlungserzeugungsvorrichtung nach einem der vorhergehenden Ansprüche, bei welcher die Gaszuführung (17, 17a, 17b) mindestens eine Düse, bevorzugt eine Laval-Düse (18, 18a, 18b), zur Zuführung des sättigbaren absorbierenden Gases (15) in die Kammer (16) aufweist.

8. EUV-Strahlungserzeugungsvorrichtung nach einem der vorhergehenden Ansprüche, bei welcher die Absorbereinrichtung (14a, 14b) eine Gasabführung (19, 19a, 19b) zur Abführung des sättigbaren absorbierenden Gases (15) aus der Kammer (16) aufweist.

9. EUV-Strahlungserzeugungsvorrichtung nach Anspruch 8, weiter umfassend: mindestens eine Pumpe, insbesondere ein Gebläse (23), zum Transport des sättigbaren absorbierenden Gases (15) von der Gasabführung (19, 19a, 19b) der Kammer (16) zur Gaszuführung (17, 17a, 17b) der Kammer (16).

10. EUV-Strahlungserzeugungsvorrichtung nach einem der vorhergehenden Ansprüche, bei welcher die Treiberlaseranordnung (12) mindestens eine Heizeinrichtung (23) zur Aufheizung des sättigbaren absorbierenden Gases (15) auf eine Temperatur (T) von mindestens 400 K umfasst.

11. EUV-Strahlungserzeugungsvorrichtung nach Anspruch 10, bei welcher ein Gebläse, insbesondere ein Radialgebläse (23), und/oder eine Einrichtung (24a, 24b) zur Erzeugung einer Gasentladung in der Kammer (16) die Heizeinrichtung bildet.

12. EUV-Strahlungserzeugungsvorrichtung nach einem der vorhergehenden Ansprüche, bei welcher die Kammer (16) ein erstes Fenster (20a) zum Eintritt der Laserpulse (11) in die Kammer (16) und ein zweites Fenster (20b) zum Austritt der Laserpulse (11) aus der Kammer (16) aufweist.

13. EUV-Strahlungserzeugungsvorrichtung nach Anspruch 12, bei welcher das erste Fenster (20a) und/oder das zweite Fenster (20b) ein Eintrittsfenster oder ein Austrittsfenster eines optischen Verstärkers (4a-c) der Verstärkeranordnung (3) bilden.

14. EUV-Strahlungserzeugungsvorrichtung nach einem der vorhergehenden Ansprüche, bei der die Strahlquelle (2) einen CO₂-Laser zur Erzeugung der Laserpulse (11) umfasst.

15. Verfahren zum Verstärken von Laserpulsen (11) in mindestens einem optischen Verstärker (4a-c) einer Treiberlaseranordnung (12) einer EUV-Strahlungserzeugungsvorrichtung (1), wobei die Laserpulse (11) von einer Strahlquelle (2) erzeugt werden und zum Unterdrücken von verstärkten spontanen Emissionen (13) vor oder nach dem mindestens einen optischen Verstärker (4a-c) einen sättigbaren Absorber (15) durchlaufen, der ein sättigbares absorbierendes Gas (15) ist, das einer Kammer (16) der Treiberlaseranordnung (12) zugeführt wird, in der eine Absorberstrecke (A) gebildet ist, bevor die Laserpulse (11) mittels einer Strahlführungseinrichtung (5) von der Treiberlaseranordnung (12) in Richtung auf eine Zielposition (T) in einer Vakuum-Kammer (10) geführt werden, an der ein Target-Material (8) angeordnet ist,
**dadurch gekennzeichnet,**
**dass** die Laserpulse (11) mittels einer Fokussiereinheit (21a, 21b) auf einen in der Kammer (16) gebildeten Zwischenfokus (Z_{F}) fokussiert werden.

16. Verfahren nach Anspruch 15, bei dem die Laserpulse (11) eine Intensität (I) aufweisen, die größer ist als eine Sättigungsintensität (I_{SAT}) des sättigbaren Absorbers (15).

## Claims

1. EUV radiation-generating apparatus (1) comprising:
a driver laser arrangement (12), comprising:
a beam source (2) for generating laser pulses (11), an amplifier arrangement (3) comprising at least one optical amplifier (4a-c) configured for amplifying the laser pulses (11), and
at least one absorber device (14a, 14b) comprising a saturable absorber (15) configured for suppressing amplified spontaneous emissions (13), the laser pulses (11) passing through said saturable absorber, wherein the absorber device (14a, 14b) has a chamber (16), in which an absorber section (A) is formed, and wherein the absorber device (14a, 14b) comprises a gas feed (17, 17a, 17b) for feeding the saturable absorber in the form of a saturable absorbent gas (15) into the chamber (16),
a vacuum chamber (10), in which a target material (8) is arranged at a target position (T), and a beam guiding device (5) configured for guiding the laser pulses (11) from the driver laser device (12) in the direction of the target position (T),
**characterized**
**in that** the driver laser device (12) has a focussing unit (21a, 21b) configured for focussing the laser pulses (11) onto an intermediate focus (Z_{F}) formed in the chamber (16).

2. EUV radiation-generating apparatus according to Claim 1, wherein the driver laser device (12) is configured to feed the laser pulses (11) to the absorber device (14a, 14b) with an intensity (I) that is greater than a saturation intensity (I_{SAT}) of the saturable absorber (15) for the laser wavelength (λ).

3. EUV radiation-generating apparatus according to Claim 1 or 2, wherein the absorber device (14a, 14b) is configured to set the pressure (p) of the saturable absorbent gas (15) in the chamber (16), the length (L) of the absorber section (A) in the chamber (16) and/or the composition of the saturable absorbent gas (15) in the chamber (16).

4. EUV radiation-generating apparatus according to any of the preceding claims, wherein the saturable absorbent gas (15) is selected from the group comprising: SF₆, water vapour, hydrocarbons, CO₂ and mixtures of same.

5. EUV radiation-generating apparatus according to any of the preceding claims, wherein the gas feed (17) is configured to pass the saturable absorbent gas (15) through the chamber (16) transversely or parallel to the absorber section (A).

6. EUV radiation-generating apparatus according to any of the preceding claims, wherein the driver laser arrangement (12) comprises a device (24a, 24b) for generating a gas discharge in the chamber (16).

7. EUV radiation-generating apparatus according to any of the preceding claims, wherein the gas feed (17, 17a, 17b) has at least one nozzle, preferably a Laval nozzle (18, 18a, 18b), for feeding the saturable absorbent gas (15) into the chamber (16).

8. EUV radiation-generating apparatus according to any of the preceding claims, wherein the absorber device (14a, 14b) has a gas outlet (19, 19a, 19b) for passing the saturable absorbent gas (15) out of the chamber (16).

9. EUV radiation-generating apparatus according to Claim 8, further comprising: at least one pump, in particular a fan (23), for transporting the saturable absorbent gas (15) from the gas outlet (19, 19a, 19b) of the chamber (16) to the gas feed (17, 17a, 17b) of the chamber (16).

10. EUV radiation-generating apparatus according to any of the preceding claims, wherein the driver laser arrangement (12) comprises at least one heating device (23) for heating the saturable absorbent gas (15) to a temperature (T) of at least 400 K.

11. EUV radiation-generating apparatus according to Claim 10, wherein a fan, in particular a radial fan (23), and/or a device (24a, 24b) for generating a gas discharge in the chamber (16) form(s) the heating device.

12. EUV radiation-generating apparatus according to any of the preceding claims, wherein the chamber (16) has a first window (20a) for the laser pulses (11) to enter the chamber (16) and a second window (20b) for the laser pulses (11) to exit from the chamber (16) .

13. EUV radiation-generating apparatus according to Claim 12, wherein the first window (20a) and/or the second window (20b) form(s) an entrance window or an exit window of an optical amplifier (4a-c) of the amplifier arrangement (3).

14. EUV radiation-generating apparatus according to any of the preceding claims, wherein the beam source (2) comprises a CO₂ laser for generating the laser pulses (11) .

15. Method for amplifying laser pulses (11) in at least one optical amplifier (4a-c) of a driver laser arrangement (12) of an EUV radiation-generating apparatus (1), wherein the laser pulses (11) are generated by a beam source (2) and pass through a saturable absorber (15) for suppressing amplified spontaneous emissions (13) upstream or downstream of the at least one optical amplifier (4a-c), said saturable absorber being a saturable absorbent gas (15) that is fed to a chamber (16) of the driver laser arrangement (12), in which an absorber section (A) is formed, before the laser pulses (11) are guided by means of a beam guiding device (5) from the driver laser arrangement (12) in the direction of a target position (T) in a vacuum chamber (10), at which a target material (8) is arranged,
**characterized**
**in that** the laser pulses (11) are focussed by means of a focussing unit (21a, 21b) onto an intermediate focus (Z_{F}) formed in the chamber (16).

16. Method according to Claim 15, wherein the laser pulses (11) have an intensity (I) that is greater than a saturation intensity (I_{SAT}) of the saturable absorber (15).

## Revendications

1. Dispositif de génération de rayonnement UV extrême (1), comportant :
un système de laser excitateur (12), comprenant :
une source de faisceau (2) pour générer des impulsions laser (11),
un système amplificateur (3) comportant au moins un amplificateur optique (4a-c) conçu pour amplifier les impulsions laser (11), ainsi qu'au moins un moyen absorbeur (14a, 14b) comprenant un absorbeur saturable (15) qui est conçu pour supprimer les émissions spontanées amplifiées (13) et qui est parcouru par les impulsions laser (11),
dans lequel le moyen absorbeur (14a, 14b) comporte une chambre (16) dans laquelle est formé un trajet d'absorption (A), et dans lequel le moyen absorbeur (14a, 14b) comprend un moyen d'amenée de gaz (17, 17a, 17b) pour amener l'absorbeur saturable sous la forme d'un gaz absorbant saturable (15) dans la chambre (16),
une chambre à vide (10) dans laquelle un matériau cible (8) est disposé à une position cible (T), et
un moyen de guidage de faisceau (5) conçu pour guider les impulsions laser (11) depuis le système de laser excitateur (12) dans la direction de la position cible (T),
**caractérisé en ce que** le système de laser excitateur (12) comporte une unité de focalisation (21a, 21b) conçue pour focaliser les impulsions laser (11) sur un foyer intermédiaire (Z_{F}) formé dans la chambre (16).

2. Dispositif de génération de rayonnement UV extrême selon la revendication 1, dans lequel le système de laser excitateur (12) est conçu pour délivrer les impulsions laser (11) au moyen absorbeur (14a, 14b) avec une intensité (I) supérieure à une intensité de saturation (I_{SAT}) de l'absorbeur saturable (15) pour la longueur d'onde du laser (λ).

3. Dispositif de génération de rayonnement UV extrême selon la revendication 1 ou 2, dans lequel le moyen absorbeur (14a, 14b) est conçu pour régler la pression (p) du gaz absorbant saturable (15) dans la chambre (16), la longueur (L) du trajet d'absorption (A) dans la chambre (16) et/ou la composition du gaz absorbant saturable (15) du système laser dans la chambre (16).

4. Dispositif de génération de rayonnement UV extrême selon l'une des revendications précédentes, dans lequel le gaz absorbant saturable (15) est sélectionné dans le groupe comprenant : le SF₆, la vapeur d'eau, des hydrocarbures, le CO₂ ainsi que des mélanges de ceux-ci.

5. Dispositif de génération de rayonnement UV extrême selon l'une des revendications précédentes, dans lequel le moyen d'amenée de gaz (17) est conçu pour guider le gaz absorbant saturable (15) à travers la chambre (16) transversalement ou parallèlement au trajet de l'absorbeur (A).

6. Dispositif de génération de rayonnement UV extrême selon l'une des revendications précédentes, dans lequel le système de laser excitateur (12) comprend un moyen (24a, 24b) pour générer une décharge gazeuse dans la chambre (16).

7. Dispositif de génération de rayonnement UV extrême selon l'une des revendications précédentes, dans lequel le moyen d'amenée de gaz (17, 17a, 17b) comprend au moins une buse, de préférence une buse de Laval (18, 18a, 18b), pour l'amenée du gaz absorbant saturable (15) dans la chambre (16).

8. Dispositif de génération de rayonnement UV extrême selon l'une des revendications précédentes, dans lequel le moyen absorbeur (14a, 14b) comprend un dispositif d'évacuation du gaz (19, 19a, 19b) pour évacuer le gaz absorbant saturable (15) de la chambre (16).

9. Dispositif de génération de rayonnement UV extrême selon la revendication 8, comprenant en outre : au moins une pompe, en particulier une soufflante (23) pour transporter le gaz absorbant saturable (15) de la sortie de gaz (19, 19a, 19b) de la chambre (16) à l'entrée de gaz (17, 17a, 17b) de la chambre (16).

10. Dispositif de génération de rayonnement UV extrême selon l'une des revendications précédentes, dans lequel le système de laser excitateur (12) comprend au moins un moyen de chauffage (23) pour chauffer le gaz absorbant saturable (15) à une température (T) d'au moins 400 K.

11. Dispositif de génération de rayonnement UV extrême selon la revendication 10, dans lequel une soufflante, en particulier une soufflante radiale (23), et/ou un moyen (24a, 24b) pour générer une décharge de gaz dans la chambre (16), forment le moyen de chauffage.

12. Dispositif de génération de rayonnement UV extrême selon l'une des revendications précédentes, dans lequel la chambre (16) comporte une première fenêtre (20a) pour l'entrée des impulsions laser (11) dans la chambre (16) et une seconde fenêtre (20b) pour la sortie des impulsions laser (11) de la chambre (16).

13. Dispositif de génération de rayonnement UV extrême selon la revendication 12, dans lequel la première fenêtre (20a) et/ou la seconde fenêtre (20b) forment une fenêtre d'entrée ou une fenêtre de sortie d'un amplificateur optique (4a-c) du système amplificateur (3).

14. Dispositif de génération de rayonnement UV extrême selon l'une des revendications précédentes, dans lequel la source de faisceau (2) comprend un laser à CO₂ pour générer les impulsions laser (11).

15. Procédé pour amplifier des impulsions laser (11) dans au moins un amplificateur optique (4a-c) d'un système de laser excitateur (12) d'un dispositif de génération de rayonnement UV extrême (1), dans lequel les impulsions laser (11) sont générées par une source de faisceau (2) et, pour supprimer les émissions spontanées amplifiées (13), passent à travers un absorbeur saturable (15) avant ou après ledit au moins un amplificateur optique (4a-c), lequel absorbeur est un gaz absorbant saturable (15) amené vers une chambre (16) du système de laser excitateur (12) dans laquelle est formé un trajet d'absorption (A), avant que les impulsions laser (11) soient guidées au moyen d'un dispositif de guidage de faisceau (5) depuis le système de laser excitateur (12) dans la direction d'une position cible (T) dans une chambre à vide (10) où est disposé un matériau cible (8), **caractérisé en ce que** les impulsions laser (11) sont focalisées au moyen d'une unité de focalisation (21a, 21b) sur un foyer intermédiaire (Z_{F}) formé dans la chambre (16) .

16. Procédé selon la revendication 15, dans lequel les impulsions laser (11) présentent une intensité (I) supérieure à une intensité de saturation (I_{SAT}) de l'absorbeur saturable (15).
